Europäisches Patentamt

European Patent Office

Office européen des brevets

(11) Publication number: **0 260 142**
**A2**

## (12) EUROPEAN PATENT APPLICATION

(21) Application number: 87308020.4

(22) Date of filing: **10.09.87**

(51) Int. Cl.⁴: **B 01 D 21/02**

(30) Priority: **11.09.86 ZA 866926**

(43) Date of publication of application:
**16.03.88 Bulletin 88/11**

(84) Designated Contracting States:
**AT BE CH DE ES FR GB GR IT LI LU NL SE**

(71) Applicant: **Gold Fields Mining & Development Limited**
**75 Fox Street**
**Johannesburg Transvaal (ZA)**

(72) Inventor: **Peverett, Noel Francis**
**1 Klip Lane Klippoortje**
**Germiston Transvaal (ZA)**

(74) Representative: **Lyndon-Stanford, Edward Willoughby**
**Brooke et al**
**MARKS & CLERK 57/60 Lincoln's Inn Fields**
**London WC2A 3LS (GB)**

(54) **Pulp thickeners.**

(57) In a pulp thickener with a conical base 10 topped by a cylinder 11, pulp is fed through pipe 20 to an inverted conical baffle 19 where the velocity of flow of the pulp is dissipated. In addition gasses are vented from the feed through pipe 17 so that flocs do not float due to adherent bubbles. In other embodiments the feed is kept constant by recirculating clear liquid.

FIG. 1

Description

"PULP THICKENERS"

## BACKGROUND TO THE INVENTION

This invention relates to pulp thickeners.

It has already been proposed to use cones for thickening, but on the account of the great headroom required and the structural cost they have not met with success in practice. Instead mechanical-discharge thickeners have become the norm. In the latter case a shallow cylindrical tank with a flat conical bottom is used. Rakes carried on rotating arms scrape the settled solids to a discharge point at the centre of the tank.

For a given throughput the tanks are large. In addition the rakes consume power.

## SUMMARY OF THE INVENTION

According to the invention a thickener comprises:

a tank having a conical base surmounted by a cylinder, a discharge at the apex of the conical base, an overflow around the top of the tank and an inlet to the centre of the tank, characterised by an inverted conical baffle above the base and of a lesser diameter than the cylinder, the inlet feeding to a feed position inside the cavity of the baffle above the apex of the baffle to dissipate the kinetic energy of the feed inside the cavity of the baffle, and a vent pipe extending from the feed position to above the top of the tank to vent entrained air.

The thickener may include a constant head tank through which the feed passes and claim means to recirculate overflow from the tank to the constant head tank to keep the upward velocity of the liquid above the baffle constant.

## DESCRIPTION OF THE DRAWINGS

Figure 1 is a diagramatic section through a thickener;

Figures 2 to 4 diagrammatically illustrate the development of a thickening operation; and

Figure 5 illustrates a further development of the thickener shown in Figure 1; and

Figure 6 is a view of another embodiment.

## DESCRIPTION OF AN EMBODIMENT

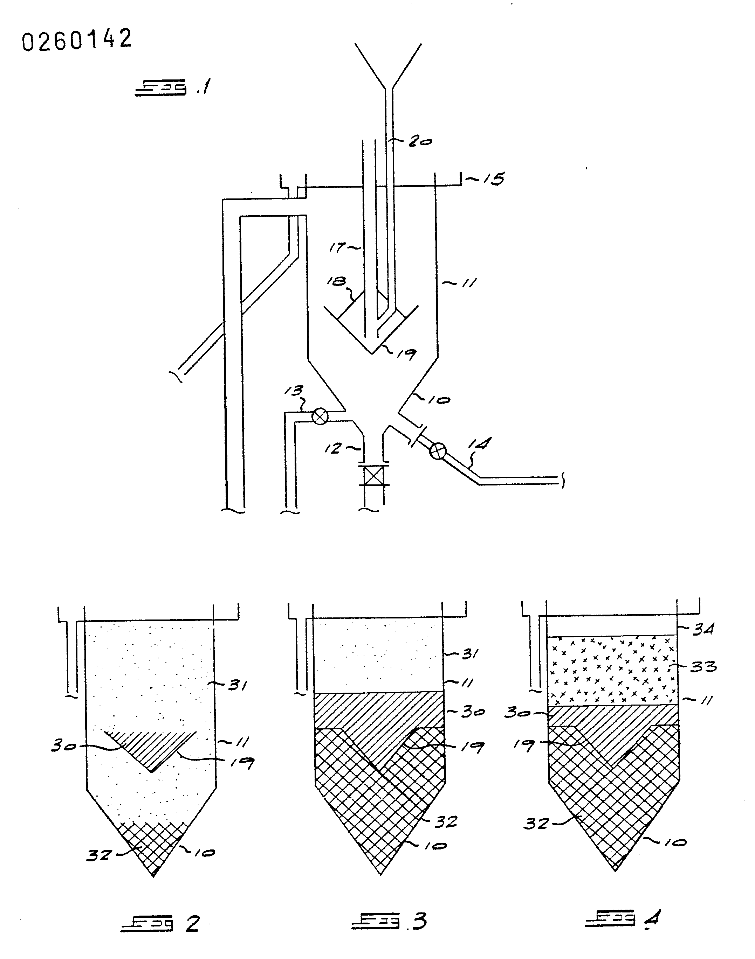

The thickener of Figure 1 has an inverted conical base 10 topped by a cylindrical section 11. The base has a drain connection 12 at its apex and water and air connections 13 and 14 for cleaning purposes.

At the top of the section 11 there is an annular overflow channel 15 and overflow trough which support a pipe 17. At its lower end the pipe 17 carries another spider 18 which is secured to a conical baffle 19. A feed pipe 20 connects with the lower end of the pipe 17. In use the pipe 17 not only serves to support the baffle 19, but also vents air and gas from the incoming pulp.

In use the feed to the feed pipe 20 is treated with a suitable flocculant to ensure that flocculation of the solids in the pulp takes place.

The arrangement is such that as the pulp enters the cavity of the baffle 19, its kinetic energy is dissipated. The result is that flocs are pushed over the rim of the baffle 19 merely by the accummulation of incoming feed and not as a result of a positive flow action. Due to the presence of the vent pipe 17, gasses are vented and do not attach to the flocs to cause them to become buoyant and float rather than settle.

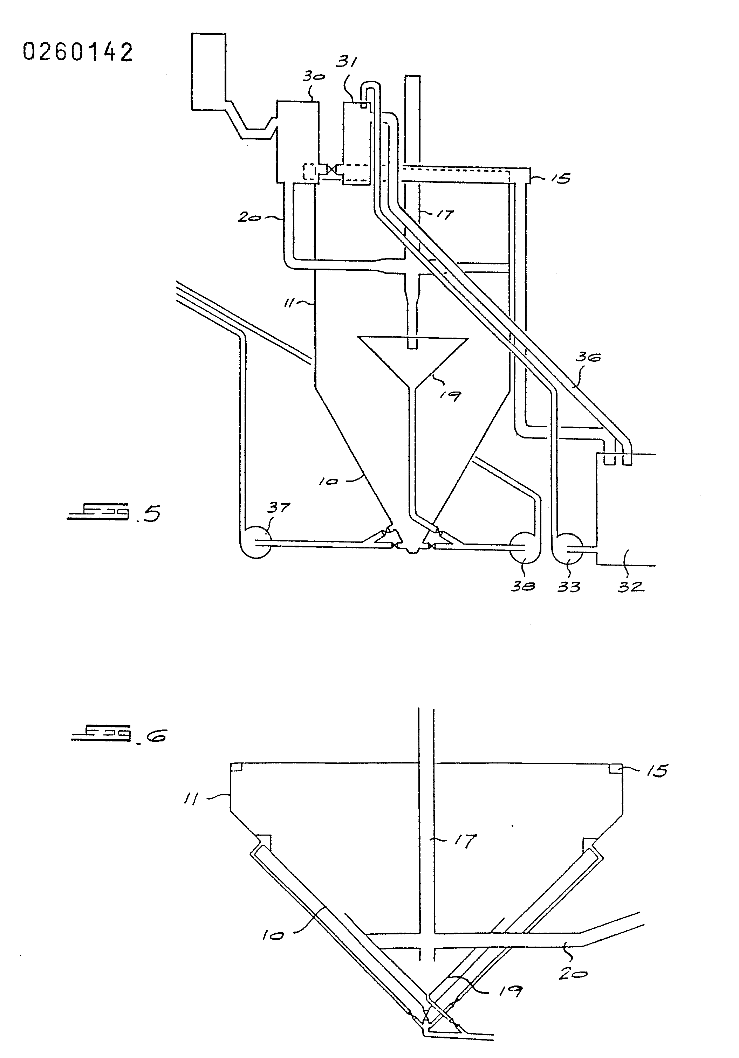

Figures 2,3 and 4 shows the various stages of development of a thickening operation. In Figure 2 the tank formed by the base 10 and the section 11 is filled with water and pulp forms a body 30 of floc in the cavity of the baffle. The surrounding solution 31 is turbid with no structure and some solids 32 collect in the base 10 as a compaction zone.

In Figure 3 the zone 30 of floc has expanded and the compaction zone 32 has also grown. There is still turbid solution 31 above the zone 30.

The final steady state is shown in Figure 4. Here the zone 30 is topped by a filtration zone 33 above which there is a relatively clear body 34 of solution. The solution 34 overflows into the channel 15 while compacted solids 32 are drained off through the drain 12.

In an experimental thickener constructed in accordance with Figure 1 an aqueous slurry at an SG of 1,100 was fed to the thickener after being treated with a flocculant at the rate of 12g/t of solids. At a feed rate of 8m$^3$ per hour it was possible to get a clear overflow (solids content 18 ppm) with an underflow which has been thickened to an SG of 1,450.

In the embodiment of Figure 5 certain refinements are added. Firstly the feed pipe 20 leads from an enclosed tank 30 formed as a constant head tank. Next to the tank 30 there is a recirculation and dosing tank 31. Clear liquid overflowing at 15 enters a sump 32 and some of it is recirculated by a pump 33 to the tank 31. Flocculant is dosed to the tank 31 and a valve 34 regulates the flow from the tank 31 to the tank 30. As a result there is a constant flow along the pipe 20 and, more importantly, the upward velocity of liquid above the baffle 19 is kept constant.

The pump 33 recirculates more liquid than is necessary to compensate for variations and in the feed flow. The excess liquid flows back to the sump 32 along the pipe 36.

Secondly the feed pipe 20 leads into the vent pipe 17 so that gas is vented before the feed enters the cavity of the baffle 19.

Settled sludge is withdrawn by means of pumps 37 and 38. The pump 38 also serves to clean out the baffle 19 when the thickener is taken out of operation.

A seven metre diameter thickener was constructed in accordance with Figure 5. A gold plant residue was thickened in the unit. The solids were 1,5% at +150 microns, 18,4% at -150 to +74 microns, 7% at -74 to +45 microns and 73,1% at -45 microns and SG varied between 1,13 and 1,25 after flocculant additions of up to 20g/t solids. The upward velocity of liquid in the thickener was kept constant at a suitable level between 3m/h to 12m/h. The underflow SG came to between 1,50 and 1,65 at solids throughput rates of 25t/m²/24h. The overflow was always clear.

On the same unit overflow from a desliming cyclone on a gold plant was thickened. The sizing was 0,1% at +150 microns, 1,1% at -150 to +74 microns, 2,6% at -74 to +45 microns, and 96,2% at -45 microns. The conditions were the same as in the previous example. Thickener underflows at an SG of between 1,45 to 1,60 were obtained with clear overflows. Typically at a feed SG of 1,23 an underflow SG of 1,48 was obtained. The lower the feed SG the higher the underflow SG that was obtained and the lesser the amount of flocculant required.

Figure 6 shows a preferred new design which has not yet been tested. In this case the baffle 19 is lower down in a fairly low thickener. The feed pipe 20 coming from a tank as in Figure 5 comes in from the side. This shortens the distance against which gasses escaping along the pipe 17 encounter incoming pulp.

## Claims

1. A thickener comprising a tank having a conical base surmounted by a cyliner, a discharge at the apex of the conical base, an overflow around the top of the tank and an inlet to the centre of the tank, characterised by an inverted conical baffle above the base and of a lesser diameter than the cylinder, the inlet feeding to a feed position inside the cavity of the baffle above the apex of the baffle to dissipate the kinetic energy of the feed inside the cavity of the baffle, and a vent pipe extending from the feed position to above the top of the tank to vent entrained air.

2. The thickener claimed in claim 1 including a constant head tank through which the feed passes.

3. The thickener claimed in claim 2 including means to recirculate overflow from the tank to the constant head tank to keep the upward velocity of the liquid above the baffle constant.

0260142

Fig. 1

Fig. 2

Fig. 3

Fig. 4

0260142

Fig. 5

Fig. 6